# DEMANDE DE BREVET EUROPEEN

(11) **EP 1 253 513 A1**
(43) Date de publication de la demande: **30.10.2002**
(21) Numéro de dépôt: 02290987.3
(22) Date de dépôt: 18.04.2002
(51) Int. Cl.: G06F 7/58

(54) **Procédé de production d'une séquence de nombres aléatoires et dispositif mettant en oeuvre le procédé**

(30) Priorité: 27.04.2001 FR 0105677
(71) Demandeur: Trialog, 75008 Paris (FR)
(72) Inventeur: Kung, Antonio, 75015 Paris (FR); Milanini, Stéphane, 75010 Paris (FR); D'Hooge, Michel, 95370 Montigny-les-Corneilles (FR)
(74) Mandataire: Kohn, Philippe

(57) **Abrégé**

La présente invention concerne un procédé de production d'une séquence de nombres aléatoires. Elle concerne aussi un dispositif mettant en oeuvre le procédé.

L'invention est bien adaptée au domaine des réseaux de communication à courants porteurs. Elle permet d'utiliser le courant porteur, principalement dans les inter-trames d'un protocole de communication pour exploiter le courant porteur comme source de bruit. En réutilisant les composants principaux d'un circuit de modulation-démodulation habituellement disponible sur les appareils connectés à un réseau de communication à courant porteur (1), l'invention permet par numérisation (5) d'une tension prélevée (1) de produire au moins un germe (7) numérique qui est transmis à un générateur de séquences aléatoires (9) à la requête ( R) d'un client (U).

Il est ainsi possible de réaliser, sans augmenter de façon notable le nombre de composants, diverses fonctions exploitant des séquences de nombres aléatoires de très bonne qualité comme l'allocation dynamique d'identificateurs dans un protocole de communications, notamment sur un réseau à courant porteur, mais non exclusivement, le cryptage des communications, etc.

## Description

La présente invention concerne un procédé de production d'une séquence de nombres aléatoires. Elle concerne aussi un dispositif mettant en oeuvre le procédé.

Dans l'état de la technique, on a déjà proposé des procédés pour engendrer des séquences de nombres aléatoires. Parmi ces procédés, on a déjà proposé de générer des séquences de nombres aléatoires à partir de germes. Plus précisément, on s'est aperçu que de nombreux procédés de génération de séquences de nombres aléatoires produisent des séquences dont il suffit de repérer un membre particulier de la séquence pour retrouver l'ensemble de la séquence. Un tel membre est désigné ci-après sous le terme de germe.

De ce fait, les procédés d'une nouvelle technique se sont fondés sur la recherche d'une approche mieux adaptée à la génération d'une séquence réellement aléatoire, c'est-à-dire telle que la succession des membres de la séquence est réellement imprévisible même si on répète la mise en route du mécanisme générateur.

Par ailleurs, dans l'état de la technique, on a déjà proposé d'utiliser des générateurs de nombres aléatoires, matériels ou logiciels, de façon à exploiter des séquences de nombres aléatoires dans des procédés d'allocation d'identificateurs sur un réseau de dispositifs électroniques échangeant des données. Un tel procédé d'allocation d'identificateur permet d'insérer les communications de données échangées avec une unité de traitement de données particulière sur le réseau dans une trame définie par un protocole de communications ainsi qu'il est connu.

Dans un autre domaine, on a déjà proposé d'utiliser des générateurs de nombres aléatoires, matériels ou logiciels, de façon à exploiter des séquences de nombres aléatoires pour réaliser des dispositifs de cryptographie, calculant des clés de cryptage sur la base de telles séquences de nombres aléatoires.

Dans un autre domaine, on a déjà proposé d'utiliser des générateurs de nombres aléatoires, matériels ou logiciels, de façon à exploiter des séquences de nombres aléatoires pour réaliser des dispositifs d'authentification d'utilisateur par exemple dans le cadre de l'autorisation d'accès à des ressources informatiques ou autres ou dans le cadre de transactions sécurisées.

Or, le fait que le germe utilisé pour générer une telle séquence de nombres aléatoires ne permette pas de réaliser des séquences réellement imprévisibles, rend ces procédés peu sûrs et nécessite de multiplier les moyens de calcul pour renforcer le caractère aléatoire, comme l'augmentation du nombre de bits codant les nombres aléatoires ou encore l'exposant des polynômes générateurs de telles séquences de nombres aléatoires au détriment de la puissance de calcul disponible, du temps de calcul disponible et/ou du coût des appareils qui incorporent de tels mécanismes.

Dans l'état de la technique, on a aussi proposé d'utiliser le réseau d'alimentation électrique en énergie comme porteur d'informations pour un réseau d'unités de traitement de données. De telles dispositions permettent d'injecter ou de prélever des données numériques sous forme d'une modulation de la tension électrique d'alimentation en énergie et de les rendre disponibles. Les unités de traitement de données sont habituellement les appareils consommateurs d'énergie électrique fournie par le réseau et des contrôleurs particulièrement associés dans ce qu'on appelle des installations domotiques. Les divers problèmes précités pour d'autres domaines techniques portent aussi dans le domaine de la domotique et un générateur de séquences aléatoires réellement imprévisible est une exigence de plus en plus aiguë.

La présente invention apporte une réponse à ces divers problèmes en proposant une nouvelle manière de générer des séquences de nombres aléatoires basée sur la production d'un germe lui-même produit à partir d'une source sûre de valeurs aléatoires.

A cette fin, le procédé de l'invention consiste essentiellement :
- à produire un signal de mesure d'un paramètre mesurable sur une source de bruit, puis
- à affecter au moins un nombre aléatoire prélevé sur ledit signal de mesure comme germe pour une séquence de nombres aléatoires, puis
- à produire une séquence de nombres aléatoires exploitant au moins un germe donné à destination d'un utilisateur de la séquence de nombres aléatoires.

Selon un autre aspect de l'invention, le procédé, pour prélever au moins un nombre aléatoire, consiste à :
- extraire le signal de bruit de la source de nombres aléatoires comme une source d'alimentation électrique, par démodulation ;
- numériser à des dates prédéterminées le produit de l'étape de démodulation du signal de bruit de la source de nombres aléatoires.

Selon un autre aspect de l'invention, le procédé, la source de nombres aléatoires étant constituée par une source d'alimentation électrique dans un réseau de distribution portant un moyen de communications par courants porteurs, consiste à déterminer les dates prédéterminées de numérisation en distinguant les instants pendant lesquels de l'information est échangée sur le réseau de distribution, des instants où aucune information n'est échangée sur le réseau de distribution et pendant lesquelles des dates prédéterminées de numérisation sont autorisées.

Selon un autre aspect de l'invention, le procédé, pour distinguer les instants pendant lesquels des dates prédéterminées de numérisation sont autorisées, consiste à décoder les données présentes sur le réseau de distribution de sorte que l'on détecte si le message reçu est un message d'échange de données, pour inhiber la détermination d'une date prédéterminée de numérisation, et dans le cas contraire, pour permettre la détermination d'une date prédéterminée de numérisation.

Selon un autre aspect de l'invention, le procédé, pour produire une séquence de nombres aléatoires, est répété une pluralité de fois ou bien en affectant à chaque exécution un germe à chaque nombre aléatoire ou bien en affectant ledit germe comme valeur de chargement à un processus producteur d'une séquence de nombres aléatoires, qui produit une pluralité de nombres aléatoires au moins jusqu'à ce qu'une nouvelle exécution ait lieu.

L'invention concerne aussi un dispositif mettant en oeuvre le procédé défini ci-dessus.

Selon un aspect de l'invention le dispositif comporte à titre de source de bruit au moins l'un des moyens suivants:
- une source de tension constituée entre deux phases de distribution de courant électrique alternatif polyphasée ;
- une source de tension constituée entre phase et neutre de distribution de courant électrique alternatif polyphasée ;
- une source de tension constituée entre une première polarité et une seconde polarité de distribution de courant électrique continu ;
- une source de tension constituée entre une première polarité et une masse électrique de distribution de courant électrique continu.

Selon un aspect de l'invention le dispositif comporte un moyen d'isolement connecté à ladite source de bruit qui effectue le prélèvement d'un signal de mesure d'un paramètre mesurable sur une source de bruit, comme la tension électrique.

Selon un aspect de l'invention le dispositif comporte un moyen adaptateur dont l'entrée reçoit le signal de mesure issu du moyen d'isolement et dont la sortie est connectée à l'entrée d'un moyen de démodulation de sorte qu'un signal représentatif d'un bruit soit produit et transmis à l'entrée d'un convertisseur analogique-numérique, la fonction de transfert du moyen adaptateur étant déterminée de sorte que le signal de mesure issu du moyen d'isolement puisse être représenté à pleine échelle par le convertisseur sur une durée déterminée.

Selon un aspect de l'invention, le dispositif comporte un contrôleur connecté par un bus de service et qui engendre des commandes:
- pour déterminer une date de numérisation en fonction de l'état de la source de bruit ;
- pour déterminer l'enregistrement d'une valeur numérisée en sortie du convertisseur comme germe de séquence aléatoire dans une mémoire ;
- pour déterminer le transfert d'au moins une valeur numérisée en sortie du convertisseur comme valeur d'une séquence aléatoire, ou comme germe pour un générateur aléatoire, vers au moins un dispositif utilisateur ;
et qui reçoit des requêtes d'au moins un dispositif générateur de requêtes pour produire au moins une valeur de germe.

Selon un aspect de l'invention, le générateur aléatoire comporte un circuit électronique à base de registres à décalage pour générer une séquence de valeurs aléatoires et des moyens de chargement d'une valeur de présélection des entrées dudit circuit électronique à base de registres à décalage, qui sont connectés à la sortie dudit registre mémorisant un germe.

Selon un aspect de l'invention, le générateur aléatoire comporte un moyen de calcul d'une fonction génératrice de valeurs aléatoires, comme une fonction polynomiale, et un moyen pour charger une valeur initiale, connecté à la sortie dudit registre mémorisant un germe.

Selon un aspect de l'invention, le dispositif est réalisé à l'aide d'un circuit intégré modulateur-démodulateur qui comporte une sortie numérique série produisant au moins un germe pour une séquence aléatoire, et qui est dédié à un réseau de communications à réseau porteur.

Selon un aspect de l'invention, le dispositif comporte un circuit de modulation-démodulation adapté à un réseau de communications pour échanger des requêtes et des valeurs aléatoires avec au moins un dispositif utilisateur connecté au réseau de communications.

Selon un aspect de l'invention, le dispositif est réalisé à partir d'un circuit intégré unique.

Selon un aspect de l'invention, le dispositif coopère avec un moyen d'allocation d'un identifiant associé à chaque appareil connecté à un réseau de communications et qui reçoit au moins un germe de valeur aléatoire, dans un protocole de communications fonctionnant dans un réseau de communications à courant porteur.

Selon un aspect de l'invention, le dispositif coopère avec au moins un dispositif générateur de clés de cryptage pour la communication sur au moins un réseau de communications.

Selon un aspect de l'invention, la source de bruit est constituée par l'ensemble des conducteurs d'alimentation électrique non reliés à une source d'alimentation électrique.

Selon un autre aspect de l'invention, le dispositif, pour attribuer à chaque équipement utilisant un protocole déterminé, un identifiant unique caractéristique de la norme, comporte un générateur aléatoire attribué à cette fonction sur l'équipement pour produire un nombre aléatoire et un moyen pour vérifier que ledit nombre aléatoire ne pourrait pas constituer une adresse en conflit, de sorte que, si le test est positif, le nombre aléatoire calculé permet d'attribuer une adresse d'équipement.

D'autres caractéristiques et avantages de l'invention apparaîtront à la lecture de la description détaillée qui suit pour la compréhension de laquelle on se reportera aux dessins annexés dans lesquels :
- la figure 1 est un schéma bloc expliquant le détail d'un dispositif mettant en oeuvre le procédé de l'invention ;
- la figure 2 est un graphique représentant le comportement temporel d'une source sûre de nombres aléatoires exploitée dans le procédé de l'invention ;
- la figure 3 est un graphique représentant une succession de germes utilisable de manière sûre pour un générateur de nombres aléatoires et qui sont produits selon le procédé de l'invention ;
- la figure 4 est un schéma bloc représentant un moyen pour améliorer la qualité statistique d'une séquence de valeurs aléatoires ;
- la figure 5 est un schéma bloc représentant un autre moyen pour améliorer la qualité statistique d'une séquence de valeurs aléatoires.

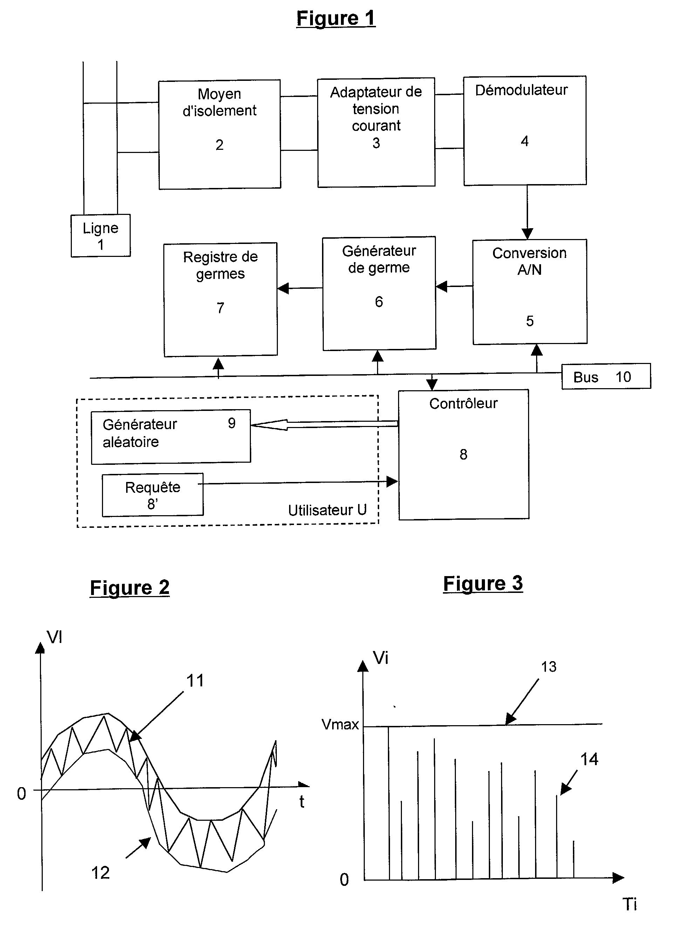

A la figure 1, on a représenté un schéma bloc expliquant le détail d'un dispositif mettant en oeuvre le procédé de l'invention.

Le procédé de l'invention consiste essentiellement à utiliser une source de bruit facilement disponible dans l'environnement dans lequel elle est appliquée.

L'une des sources de bruit les plus largement répandue dans les systèmes de traitement de données est constituée par le réseau de distribution d'électricité lui-même. Ainsi qu'il est bien connu, même en l'absence de couplage d'énergie dans la partie consommatrice du réseau d'alimentation électrique, un signal de bruit existe parfois de très faible puissance ou parfois de puissance trop importante pour être directement utilisé.

Selon l'invention, il est donc prévu d'utiliser une étape d'adaptation du paramètre mesurée sur la source de bruit. Dans une application typique de l'invention, le réseau d'alimentation électrique est constitué par le réseau de distribution d'électricité en courant alternatif, par exemple monophasé et en Europe à 240 Volts efficaces et 50 hertz. La mesure de la tension électrique sur un tel réseau fournit une quantité importante de valeurs numériques aléatoires ou pseudo-aléatoires qu'il est possible d'exploiter pour produire une séquence de valeurs aléatoires de bonne qualité.

De cette analyse, l'invention a tiré les caractéristiques que le procédé de production d'une séquence de valeurs numériques aléatoires doit comporter:
- une étape pour produire un signal de mesure d'un paramètre mesurable, comme la tension sur une phase, sur une source de bruit comme une phase d'un réseau de distribution de courant alternatif, puis
- une étape pour affecter au moins un nombre aléatoire prélevé sur ledit signal de mesure,

Le prélèvement du signal de bruit doit s'effectuer notamment en réalisant une adaptation du paramètre mesuré. Si le signal mesuré est un signal de tension, l'amplitude de la tension maximale doit être limitée à la valeur maximale admissible par le dispositif qui met en oeuvre le procédé de l'invention. Par ailleurs, la dynamique du signal de mesure doit être telle que, pendant les intervalles de temps où le prélèvement du signal de mesure est requis pour exploiter le procédé de l'invention les diverses valeurs mesurées se répartissent statistiquement de manière convenable entre la valeur minimale et la valeur maximale admissibles par le dispositif de mise en oeuvre du procédé. L'homme de métier saura en fonction des critères connus spécifiant le signal de mesure prélevé sur la source de bruit, ici la tension entre phase et neutre du réseau de distribution électrique, déterminer la fonction de transfert du module d'adaptation du signal de mesure.

Dans le procédé de l'invention, l'étape suivante comprend une étape d'extraction du signal de bruit. En effet, ainsi qu'il est représenté à la Figure 2, dans le cas d'une source de bruit constituée entre phase et neutre d'un réseau de distribution de courant alternatif, le bruit se manifeste en général sous la forme d'une modulation d'un signal utile. Un tel signal utile, dans le cadre de l'invention de signal porteur, est constitué par l'onde utile de puissance, quand la partie consommatrice est connectée au réseau, ou par les couplages parasites ou les pertes quand la partie consommatrice sur laquelle est généralement disposé le dispositif de l'invention n'est pas couplée au reste du réseau.

Selon le procédé de l'invention, on a considéré avec de bons résultats que la modulation de bruit était une modulation d'amplitude qui est représentée à la figure 2 entre une enveloppe haute 11 de modulation et une enveloppe basse 12 de modulation. Cependant, dans d'autres applications, d'autres modulations sont exploitées comme une modulation de fréquence ou une modulation de phase.

Selon le procédé de l'invention, on exécute ensuite une étape de numérisation du signal démodulé, par exemple avec un convertisseur analogique numérique. A cette fin, selon l'invention, on exécute à des dates prédéterminées ou bien périodiquement ou bien en fonction d'une requête présentée sur le dispositif de mise en oeuvre du procédé de l'invention, un échantillonnage du signal démodulé et une numérisation entre une valeur Vmax (voir Figure 3) et une valeur nulle. On peut ainsi recueillir au moins une valeur numérique comme la valeur numérique 14, ou une pluralité de valeurs numériques réparties aléatoirement entre le niveau 13 maximal par exemple sur un mot de 8 bits une valeur de 255 et la valeur nulle. Au moins une telle valeur numérique à une date donnée est choisie comme germe pour une séquence de nombres aléatoires.

Dans un mode de réalisation de l'invention, le procédé consiste ensuite à fournir au moins une valeur numérique ainsi produite comme séquence de valeurs aléatoires à un dispositif utilisateur.

Dans un autre mode de réalisation, avant de fournir la séquence de valeurs aléatoires demandée par un dispositif utilisateur, un mécanisme générateur d'une séquence de valeurs aléatoires utilise comme germe ou comme valeur de chargement ou valeur d'initialisation au moins une valeur numérique issue de l'étape de conversion analogique numérique. Une telle technique peut se fonder ou bien sur un mécanisme électronique à base de décalages de bits à partir de la valeur de chargement constitué par le germe fourni, ou bien par un mécanisme logiciel, dans lequel une fonction polynomiale permet à partir d'au moins une valeur initiale constituée par le germe fourni de générer une séquence de valeurs aléatoires.

Dans une telle application, le procédé de l'invention est exécuté plusieurs fois, ou bien cycliquement ou bien de manière asynchrone en exécution d'une requête présentée par un générateur de Requête 8' dans un dispositif utilisateur 8', 9.

Dans un mode de réalisation, le réseau de distribution d'électricité qui a servi dans le cadre de l'invention de source de bruit pour produire un germe pour une séquence aléatoire et une telle séquence aléatoire, sert aussi de réseau de communication par courant porteur.

Dans une telle application, il est préféré selon l'invention de ne mesurer le signal de bruit que lorsque aucun message de communication n'est échangé sur le réseau de communication à courant porteur. Dans un protocole classiquement utilisé sur un tel réseau, les messages constitués par des mots binaires modulés et transmis sur le réseau par l'intermédiaire d'un convertisseur numérique analogique, un circuit d'adaptation et un moyen de couplage au réseau comme un transformateur, sont transmis lors de trames temporelles. Un tel protocole ménage des intervalles de temps entre trames appelées inter-trame et, de plus, si le réseau de communications ne comporte pas son nombre maximal de dispositifs connectés, un certain nombres de trames de messageries sont silencieuses.

Dans un mode préféré de réalisation, le procédé consiste à décoder les trames et, si aucun en-tête caractéristique d'un message de communication n'est détecté, le contrôle du procédé permet qu'une détection de bruit ait lieu pour produire un germe et une séquence de valeurs aléatoires.

Les dispositifs utilisateurs U de la séquence aléatoire produite peuvent être connectés au dispositif de mise en oeuvre par un bus local ou par un réseau de communications. C'est en particulier le cas, quand l'invention est exécutée sur un réseau de communications à courant porteur. Dans ce cas chaque dispositif connecté au réseau à courant porteur peut demander au dispositif de mise en oeuvre du procédé de l'invention de recevoir une séquence de valeurs aléatoires par exemple dans le cadre d'un mécanisme d'allocation d'identificateurs pour le protocole d'allocation de trames de communication, ainsi qu'il est connu dans les technologies de réseau de type "plug and play". Dans le cadre de protocoles connus comme les protocoles EHS ™ ou Konnex ™, chaque appareil électronique possède son propre générateur aléatoire pour générer une adresse arbitraire identifiant l'appareil électronique dans le réseau, puis pour vérifier que cette adresse n'est pas en conflit avec l'adresse d'un autre appareil.

Il est clair que ces échanges peuvent aussi se passer sur d'autres réseaux de communications, par exemple si le dispositif de mise en oeuvre de l'invention est intégré à un ordinateur connecté à un réseau à courant porteur. Le procédé de production de séquences de valeurs aléatoires peut ensuite être exporté sur un réseau local par exemple de type Ethernet, ou un réseau téléinformatique comme Internet.

L'exploitation d'une telle séquence de valeurs aléatoires peut ainsi être avantageuse pour réaliser un cryptage de données échangées ou pour exécuter des traitements de données nécessitant des séquences de valeurs numériques aléatoires comme une simulation de Monte-Carlo.

Dans un autre exemple d'utilisation de l'invention, dans le cadre d'une norme déterminée, l'invention permet d'attribuer à chaque équipement utilisant ledit protocole un identifiant unique caractéristique de la norme. Dans une telle application, le générateur aléatoire attribué à cette fonction sur l'équipement produit un nombre aléatoire et vérifie qu'il ne pourrait pas constituer une adresse en conflit. Si le test est positif le nombre aléatoire calculé permet d'attribuer une adresse d'équipement.

On remarque un avantage de la présente invention de ne pas nécessiter de composants nouveaux et en nombre important particulièrement quand le procédé est exécuté sur un réseau de communications à courant porteur parce que la plupart des composants nécessaires pour réaliser le dispositif de mise en oeuvre sont déjà disposés sur les dispositifs habituellement connectés. Il suffit de rajouter essentiellement une mémoire pour le germe ou la séquence aléatoire et un programme qui, exécuté sur le microcontrôleur du dispositif cible, permet de mettre en oeuvre le procédé de l'invention.

A la figure 1, on a représenté un schéma bloc expliquant le détail d'un dispositif mettant en oeuvre le procédé de l'invention.

La source de bruit 1 est, dans un mode préféré de réalisation de l'invention, constituée entre deux lignes de distribution de courant, par exemple dans un réseau de communications à courant porteur.

Les deux lignes peuvent être placées au neutre et à une phase ou entre deux phases ou entre une phase et la masse si le réseau de distribution est à courant alternatif. Les deux lignes peuvent être placées entre deux polarités ou entre une polarité et une masse électrique si le réseau de distribution est à courant continu.

D'autres sources de bruit sont possibles, incluant notamment un circuit électronique comme un circuit incorporant une jonction semi-conductrice dont la polarisation produit un signal de bruit thermique.

Le signal de mesure du procédé de l'invention est prélevé à travers un moyen d'isolement comme un transformateur à enroulements qui permet essentiellement de protéger la source de bruit et le dispositif de l'invention ainsi qu'il est connu.

Le secondaire du transformateur 2 est connecté à un circuit d'adaptation 3 dont la fonction de transfert a été définie lors de la description du procédé de l'invention. La sortie du circuit d'adaptation 3 est connectée à l'entrée d'un circuit de démodulation 4 qui permet de produire à sa sortie un signal analogique représentatif du bruit prélevé sur la source de bruit 1.

La sortie du circuit de démodulation 4 est connectée à l'entrée d'un circuit de conversion analogique numérique 5. Dans un mode de réalisation, le convertisseur 5 admet une largeur de bus de sortie de données de conversion de 8 bits, les valeurs de la séquence de valeurs aléatoires issue du convertisseur 5 se trouvant entre 0 et 255. La conversion analogique en valeur numériques est commandée par le signal de commande en provenance d'un contrôleur 8 sur un bus de commande 10.

La sortie numérique du convertisseur 5 est connectée à l'entrée d'un circuit générateur de germe 6. Dans un mode de réalisation, le générateur de germe 6 est constitué par un registre dont l'entrée d'écriture est activée par un signal de commande en provenance d'un contrôleur 8 sur un bus de commande 10. Dans un tel mode de réalisation, le contrôleur détermine en fonction d'un programme qui y est enregistré et d'une requête produite par un générateur de requêtes 8' et reçue d'un dispositif utilisateur U qui comporte ledit générateur de requêtes 8', la date de prélèvement du germe dans la séquence de valeurs aléatoires générée en sortie du convertisseur analogique numérique 5.

Le germe est alors fourni par le contrôleur 8 à l'entrée d'un circuit générateur 9 de séquences aléatoires, interne au dispositif utilisateur U. Dans un mode de réalisation, un tel circuit est réalisé sous forme matérielle par un circuit à base de registres à décalage dont les valeurs d'entrée peuvent être pré chargées par la valeur du germe prélevé par le circuit générateur de germe 6. Dans un autre mode de réalisation, le circuit générateur 9 de séquences aléatoires est réalisé sous forme logicielle à l'aide d'un microcontrôleur, d'un microprocesseur ou d'un dispositif micro programmé. Il s'agit du contrôleur 8 dans un mode préféré de réalisation. Le générateur logiciel de séquences aléatoires reçoit une valeur initiale sous la forme du germe produit par le générateur de germes 6. Le générateur logiciel produit alors une séquence de valeurs aléatoires disponible à un utilisateur U, comme celui qui a exposé la requête R.

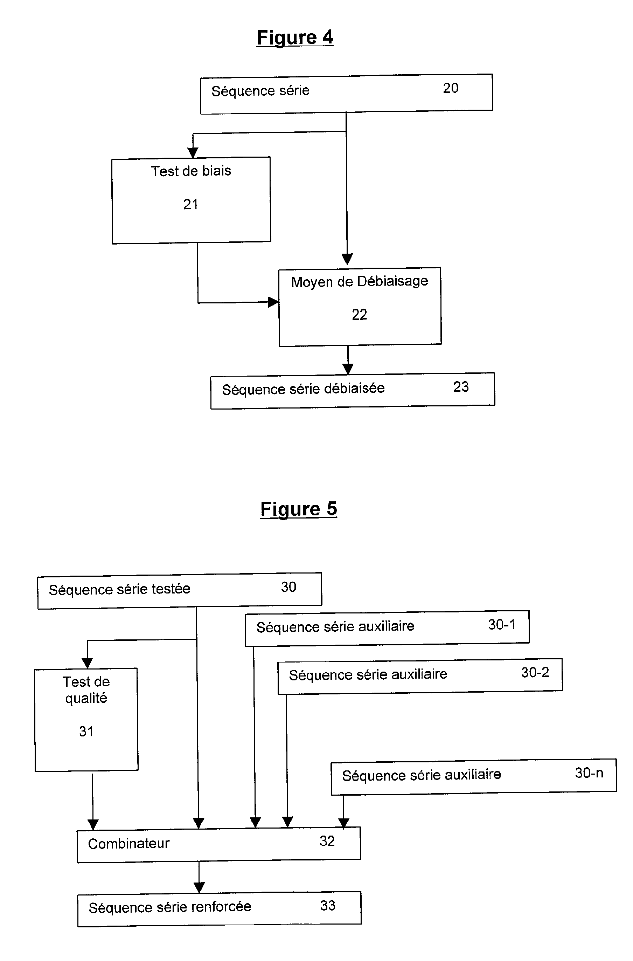

A la figure 4, on a représenté un schéma bloc représentant un moyen pour améliorer la qualité statistique d'une séquence de valeurs aléatoires.

Quand le convertisseur analogique numérique 5 est une partie d'un circuit "modem" standard comme un circuit modem pour réseau à courant porteur, on utilise un moyen de débiaisage réalisé préférentiellement par une fonction logicielle de débiaisage, les valeurs aléatoires issues du convertisseur analogique numérique sont sous forme d'une séquence série qui est présente sur un registre 20. Il peut arriver que bien qu'elles composent des séquences de valeurs aléatoires elles comportent plus de "1" que de "0", ou l'inverse. Un moyen 22 de débiaisage comporte une entrée d'activation connectée à la sortie d'activation d'un moyen de test 21 et une entrée de séquence série habituellement directement connectée à sa sortie si le test exécuté par le moyen 21 ne détecte pas l'existence d'un biais significatif. Un moyen de débiaisage 22 est préférentiellement réalisé au moyen de la détection de la parité d'un nombre déterminé arbitraire de bits produits dans le flux série 20 issu du convertisseur 5. La séquence 20 comporte une suite aléatoire de "0" et de "1". Cette fonction est préférentiellement exécutée au moyen du générateur aléatoire 9 par un contrôleur micro programmé convenable. Un tel traitement est, dans un mode de réalisation, exécuté après exécution du test par un moyen de test de biais 21, sur une réponse positive du moyen de test 21 qui indique que la séquence de bits série 20 produite en sortie du convertisseur analogique 5 est biaisée. A cette occasion, la séquence 20 d'une longueur prédéterminée, par exemple 20 bits, selon la décision du contrôleur 8, est remplacée par le bit de test de parité sorti du moyen de Test de biais 21 et associée dans le flux série dans un registre de séquence série débiaisée 23. D'autres traitements de débiaisage sont applicables.

La figure 5 est un schéma bloc représentant un autre moyen pour améliorer la qualité statistique d'une séquence de valeurs aléatoires.

Dans un mode de réalisation, le dispositif de l'invention comporte un moyen de test 31 de la qualité de production de la séquence de valeurs aléatoires issue du générateur 9 et enregistrée dans un registre série 30. Le moyen de Test de qualité 31 exécute un test de qualité statistique de la séquence et si cette dernière est déterminée comme médiocre, le moyen de Test de qualité 31 active un moyen de combinaison 32 de plusieurs registres série de séquences aléatoires 30-1, 30-2, ..., 30-n produites ainsi qu'il a été décrit plus haut.

Chaque séquence 30, 30-1, ..., 30-n peut être produite à une date déterminée, puis stockée dans une mémoire pour une utilisation ultérieure U, quand le moyen de test 31 de qualité statistique active le moyen de combinaison 32.

Chaque séquence peut être produite par un dispositif de mise en oeuvre du procédé décrit ci-dessus et présent sur un réseau de communication de sorte que la séquence est accessible à un dispositif de production d'une séquence de valeurs aléatoires dotée d'un moyen de test 31 de la qualité statistique des séquences et d'un moyen de combinaison 32 des diverses séquences.

Le moyen de combinaison 32 est préférentiellement constitué par une fonction de mélange en OU Exclusif des bits en série des valeurs issues des diverses mémoires de valeurs aléatoires présentes. D'autres fonctions de mélange comme celle exécuté par un algorithme DES sont possibles.

Le moyen de test 31 de qualité statistique qui active le moyen de mélange est réalisé par l'un des tests suivants :
- le test de séquences de bits identiques qui est activé si un nombre trop élevé de séquences de bits identiques a été détecté dans la séquence principale 30 ;
- le test de Diehard.

Dans un mode particulier de réalisation, la source de bruit du dispositif de l'invention peut avantageusement être constituée par la réunion d'un ou plusieurs conducteurs d'alimentation électrique quand le réseau ou la source d'alimentation électrique est coupée. C'est en particulier le cas quand la source d'alimentation électrique est défaillante, la source de bruit pouvant alors continuer son action. En effet, dans l'invention on s'est rendu compte que un signal de bruit utilisable par le dispositif de l'invention continuait être perçu sur la source de bruit même si l'alimentation électrique était coupée. Parmi les effets responsables d'un tel signal de bruit, il y a la détection par le circuit composé par les conducteurs d'alimentation des perturbations radio-électrique ainsi que de courants de masse et ou de terre selon le mode d'alimentation du dispositif. C'est un avantage de la présente invention de, de plus, ne pas être directement affectée par les pannes d'alimentation.

## Revendications

1. Procédé de production d'une séquence de nombres aléatoires, **caractérisé en ce qu'**il consiste :
- à produire un signal de mesure d'un paramètre mesurable sur une source de bruit, puis
- à affecter au moins un nombre aléatoire prélevé sur ledit signal de mesure comme germe pour une séquence de nombres aléatoires, puis
- à produire une séquence de nombres aléatoires exploitant au moins un germe donné à destination d'un utilisateur de la séquence de nombres aléatoires.

2. Procédé selon la revendication 1, **caractérisé en ce que**, pour prélever au moins un nombre aléatoire, il consiste à :
- extraire le signal de bruit de la source de nombres aléatoires comme une source d'alimentation électrique, par démodulation ;
- numériser à des dates prédéterminées le produit de l'étape de démodulation du signal de bruit de la source de nombres aléatoires.

3. Procédé selon la revendication 2, la source de nombres aléatoires étant constituée par une source d'alimentation électrique dans un réseau de distribution portant un moyen de communications par courants porteurs, **caractérisé en ce qu'**il consiste à déterminer les dates prédéterminées de numérisation en distinguant les instants pendant lesquels de l'information est échangée sur le réseau de distribution, des instants où aucune information n'est échangée sur le réseau de distribution et pendant lesquelles des dates prédéterminées de numérisation sont autorisées.

4. Procédé selon la revendication 3, **caractérisé en ce que**, pour distinguer les instants pendant lesquels des dates prédéterminées de numérisation sont autorisées, il consiste à décoder les données présentes sur le réseau de distribution de sorte que l'on détecte si le message reçu est un message d'échange de données, pour inhiber la détermination d'une date prédéterminée de numérisation, et dans le cas contraire, pour permettre la détermination d'une date prédéterminée de numérisation.

5. Procédé selon l'une des revendications précédentes, **caractérisé en ce que**, pour produire une séquence de nombres aléatoires, il est répété une pluralité de fois ou bien en affectant à chaque exécution un germe à chaque nombre aléatoire ou bien en affectant ledit germe comme valeur de chargement à un processus producteur d'une séquence de nombres aléatoires, qui produit une pluralité de nombres aléatoires au moins jusqu'à ce qu'une nouvelle exécution ait lieu.

6. Dispositif pour la mise en oeuvre du procédé selon l'une des revendications précédentes, **caractérisé en ce qu'**il comporte à titre de source de bruit (1) au moins l'un des moyens suivants :
- une source de tension constituée entre deux phases de distribution de courant électrique alternatif polyphasée ;
- une source de tension constituée entre phase et neutre de distribution de courant électrique alternatif polyphasée ;
- une source de tension constituée entre une première polarité et une seconde polarité de distribution de courant électrique continu ;
- une source de tension constituée entre une première polarité et une masse électrique de distribution de courant électrique continu.

7. Dispositif selon la revendication 6, **caractérisé en ce qu'**il comporte un moyen d'isolement (2) connecté à ladite source de bruit (1) qui effectue le prélèvement d'un signal de mesure d'un paramètre mesurable sur une source de bruit, comme la tension électrique.

8. Dispositif selon la revendication 7, **caractérisé en ce qu'**il comporte un moyen adaptateur (3) dont l'entrée reçoit le signal de mesure issu du moyen d'isolement (2) et dont la sortie est connectée à l'entrée d'un moyen de démodulation (4) de sorte qu'un signal représentatif d'un bruit soit produit et transmis à l'entrée d'un convertisseur analogique-numérique (5), la fonction de transfert du moyen adaptateur (3) étant déterminée de sorte que le signal de mesure issu du moyen d'isolement (2) puisse être représenté à pleine échelle par le convertisseur (5) sur une durée déterminée.

9. Dispositif selon la revendication 8, **caractérisé en ce qu'**il comporte un contrôleur (8) connecté par un bus de service et qui engendre des commandes:
- pour déterminer une date de numérisation en fonction de l'état de la source de bruit (1) ;
- pour déterminer l'enregistrement d'une valeur numérisée en sortie du convertisseur (5) comme germe de séquence aléatoire dans une mémoire (7);
- pour déterminer le transfert d'au moins une valeur numérisée en sortie du convertisseur (5) comme valeur d'une séquence aléatoire, ou comme germe pour un générateur aléatoire (9), vers au moins un dispositif utilisateur ;
et qui reçoit des requêtes ( R) d'au moins un dispositif (8') générateur de requêtes pour produire au moins une valeur de germe.

10. Dispositif selon la revendication 9, **caractérisé en ce que** le générateur aléatoire (9) comporte un circuit électronique à base de registres à décalage pour générer une séquence de valeurs aléatoires et des moyens de chargement d'une valeur de présélection des entrées dudit circuit électronique à base de registres à décalage, qui sont connectés à la sortie dudit registre (7) mémorisant un germe.

11. Dispositif selon la revendication 9, **caractérisé en ce que** le générateur aléatoire (9) comporte un moyen de calcul d'une fonction génératrice de valeurs aléatoires, comme une fonction polynomiale, et un moyen pour charger une valeur initiale connecté à la sortie dudit registre (7) mémorisant un germe.

12. Dispositif selon la revendication 8 ou 9, **caractérisé en ce qu'**il est réalisé à l'aide d'un circuit intégré modulateur-démodulateur (5) qui comporte une sortie numérique série produisant au moins un germe pour une séquence aléatoire, et qui est dédié à un réseau de communications à réseau porteur.

13. Dispositif selon l'une des revendications 8 à 10, **caractérisé en ce qu'**il comporte un circuit de modulation-démodulation (5) adapté à un réseau de communications pour échanger des requêtes ( R) et des valeurs aléatoires avec au moins un dispositif utilisateur (8', 9) connecté au réseau de communications.

14. Dispositif selon l'une des revendications 6 à 13, **caractérisé en ce qu'**il est réalisé à partir d'un circuit intégré unique.

15. Dispositif selon l'une des revendications 6 à 14, **caractérisé en ce qu'**il coopère avec un moyen d'allocation d'un identifiant associé à chaque appareil connecté à un réseau de communications et qui reçoit au moins un germe de valeur aléatoire, dans un protocole de communications fonctionnant dans un réseau de communications à courant porteur.

16. Dispositif selon l'une des revendications 6 à 15, **caractérisé en ce qu'**il coopère avec au moins un dispositif générateur de clés de cryptage pour la communication sur au moins un réseau de communications.

17. Dispositif selon l'une des revendications 6 à 16, **caractérisé en ce que** la source de bruit est constituée par l'ensemble des conducteurs d'alimentation électrique non reliés à une source d'alimentation électrique.

18. Dispositif selon l'une des revendications 6 à 17, **caractérisé en ce que**, pour attribuer à chaque équipement utilisant un protocole déterminé, un identifiant unique caractéristique de la norme, il comporte un générateur aléatoire attribué à cette fonction sur l'équipement pour produire un nombre aléatoire et un moyen pour vérifier que ledit nombre aléatoire ne pourrait pas constituer une adresse en conflit, de sorte que, si le test est positif, le nombre aléatoire calculé permet d'attribuer une adresse d'équipement.
